# EUROPEAN PATENT SPECIFICATION

(11) **EP 4 434 335 B1**
(45) Date of publication and mention of the grant of the patent: **19.08.2026**
(21) Application number: 24152033.7
(22) Date of filing: 16.01.2024
(51) Int. Cl.: A01K 89/01

(54) **FISHING SPINNING REEL**
ANGELWINDE
MOULINET DE PÊCHE

(30) Priority: 23.03.2023 JP 2023046669
(43) Date of publication of application: 25.09.2024
(73) Proprietor: Globeride, Inc., Higashikurume-shi, Tokyo 203-8511 (JP)
(72) Inventor: TSUTSUMI, Wataru, Higashikurume-shi, 203-8511 (JP); UENO, Hayato, Higashikurume-shi, 203-8511 (JP)
(74) Representative: Boult Wade Tennant LLP

(56) References cited:
- JP-A- H08 136
- JP-A- H10 276 629
- US-A1- 2022 259 005

## Description

### BACKGROUND OF THE INVENTION

### 1. TECHNICAL FIELD

The present invention relates to a fishing spinning reel.

### 2. DESCRIPTION OF THE RELATED ART

In the related art, in a fishing spinning reel, a technique for fixing a connecting portion between a bail and a line slider through welding, fusion welding, caulking, bonding, or the like has been known (for example, refer to JP 2000-279068 A). In the fishing spinning reel of JP 2000-279068 A, for example, the bail and the line slider are joined by fitting a pin into a hollow portion of an end of the line slider to connect the end of the line slider and an end of the bail to each other, and performing a welding process or a fusion welding process on the connecting portion. JP H10 276629 A discloses a fishing spinning reel according to the preamble of claim 1.

### RELEVANT REFERENCES

### LIST OF RELEVANT PATENT LITERATURE

Patent Literature 1: Japanese Application Publication No. 2000-279068

### SUMMARY OF THE INVENTION

However, in the fishing spinning reel of JP 2000-279068 A, since the end of the line slider and the end of the bail can be joined by welding, fusion welding, caulking, bonding, or the like, joining work is complicated and the cost is high, which is a problem.

The present invention has been made in order to solve such a problem, and an object of the present invention is to provide a fishing spinning reel in which a bail can be easily attached to a line slider and in which assembly can be realized at low cost.

In order to solve the above-described problems, a fishing spinning reel according to the present invention defined in claim 1 comprises a rotor rotated by a winding operation of a handle; a bail support member attached to a support arm of the rotor, and supporting a bail; a line roller supported by the bail support member, and guiding a fishing line to a spool around which the fishing line is wound and held; and a line slider supporting one end of the bail, and guiding the fishing line picked up by the bail to the line roller. The one end of the bail is attached to the line slider by a fixing screw.

In the fishing spinning reel, since the one end of the bail can be attached to the line slider by tightening the fixing screw, the bail is easily attached. In addition, since the bail is easily attached, and welding, fusion welding, caulking, bonding, or the like is not required when the bail is fixed, assembly can be realized at low cost.

The fishing spinning reel further comprises an attachment portion provided at the one end of the bail and disposed in the line slider, and that the attachment portion is fixed to the line slider by tightening the fixing screw from a line slider side.

In this configuration, since the fixing screw can be screwed from the line slider side, it is not necessary to provide a screw hole on an outer surface side of the bail support member. Accordingly, in the event of line entanglement of the fishing line, even when the fishing line moves on the outer surface side of the bail support member, damage to the fishing line due to contact with the screw hole does not occur.

In addition, it is preferable that the fishing spinning reel further comprises an accommodation portion having a bottomed tubular shape, provided in the line slider, and accommodating the attachment portion, and that the fixing screw is inserted into the line slider through an opening of the accommodation portion.

In this configuration, it is possible to insert the fixing screw through the opening of the accommodation portion while accommodating the attachment portion in the accommodation portion of the line slider. Therefore, the attachment portion of the bail is suitably accommodated in the line slider, and the bail is easily fixed. In addition, when at least a part of the fixing screw is configured to be accommodated in the accommodation portion, the fishing line is also less likely to become entangled with the head of the fixing screw on the line slider side.

It is preferable that an insertion hole into which the one end of the bail is inserted is formed on a side surface of the line slider. It is preferable that the insertion hole has an inner diameter larger than an outer diameter of the one end of the bail.

In this configuration, a gap can be formed between the bail and the insertion hole, and when the bail is rotated between a fishing line winding position and a fishing line release position, contact between the bail and the insertion hole due to vibration or the like can be suitably prevented. Therefore, deformation or damage due to contact between the bail and the insertion hole can be prevented beforehand. This contributes to preventing damage to the fishing line. In addition, since the inner diameter of the insertion hole is larger than the outer diameter of the bail, the degree of freedom of the one end of the bail when being inserted into the insertion hole is increased, so that assemblability can be improved.

According to the fishing spinning reel of the present invention, it is possible to easily attach the bail to the line slider, and realize assembly at low cost.

### BRIEF DESCRIPTION OF THE DRAWINGS

FIG. 1 is a side view illustrating an overall configuration of a fishing spinning reel according to one embodiment of the present invention;
FIG. 2 is a perspective view in which the same one bail support member, a line roller, and a line slider are disassembled and arranged side by side;
FIG. 3 is an enlarged perspective view illustrating the same slider and one end of a bail;
FIGS. 4A to 4D are enlarged views illustrating the same line slider, FIG. 4A is a plan view, FIG. 4B is a front view of FIG. 4A, FIG. 4C is a side view of FIG. 4A, and FIG. 4D is a cross-sectional view taken along line IV-IV in FIG. 4A;
FIG. 5 is an enlarged perspective view illustrating an extending angle of the one end of the bail with respect to the same line slider; and
FIG. 6 is an explanatory view for explaining a bending angle of the one end of the same bail.

### DETAILED DESCRIPTION

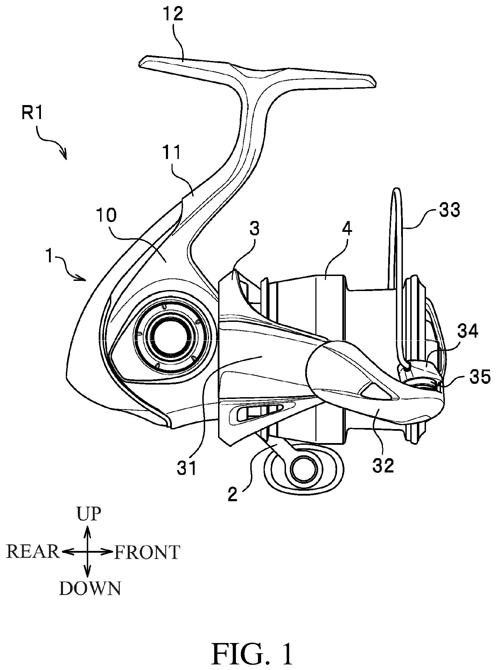

A fishing spinning reel according to an embodiment will be described with reference to the drawings. In the following description, "front and rear" and "up and down" referred to are defined based on directions illustrated in FIG. 1.

A fishing spinning reel R1 of the present embodiment comprises a reel body 1 to which a handle 2 is attached; a rotor 3 provided on the front side of the reel body 1 and rotated by a winding operation of the handle 2; and a spool 4 provided on the front side of the rotor 3 and reciprocated in a front-rear direction by a winding operation of the handle 2.

The reel body 1 comprises a body 10 and a leg portion 11 comprising a rod attachment portion 12, which extends upward from an upper portion of the body 10 to be mounted to a fishing rod, at a distal end. The body 10 comprises a body front portion having a tubular shape through which a drive shaft tube and a spool shaft (not illustrated) penetrate. The rotor 3 is attached to a front end of the drive shaft tube to cover the body front portion, and the spool 4 is attached to a front end of the spool shaft to cover a cylindrical portion (not illustrated) of the rotor 3.

A drive gear (not illustrated) that rotates around a handle shaft when the handle 2 is operated to rotate and a pinion gear (not illustrated) externally fitted to the drive shaft tube to mesh with the drive gear are provided inside the body 10. In addition, an oscillating mechanism driven by a drive gear attached to the handle shaft is connected to a rear portion of the spool shaft. Accordingly, when the drive gear is rotated by a rotational operation of the handle 2, the spool shaft and the spool 4 move forward and rearward, and a fishing line is wound around the spool 4 in a parallel and even manner.

The rotor 3 comprises a support arm 31 and a bail support member 32 rotatably attached to a front portion of the support arm 31. A pair of the support arms 31 and a pair of the bail support members 32 are each formed at an interval of substantially 180 degrees with respect to the cylindrical portion of the rotor 3, and are rotated around the spool 4 by the rotation of the rotor 3. In the fishing spinning reel R1 illustrated in FIG. 1, the support arm 31 and the bail support member 32 are located at the center in an up-down direction on one side that is one side of the reel body 1. In the pair of support arms 31 and the pair of bail support members 32, the support arm 31 and the bail support member 32 on the one side illustrated in FIG. 1 are referred to as one support arm 31 and one bail support member 32, and although not illustrated, the support arm 31 and the bail support member 32 on the other side opposite to the one side are referred to as the other support arm 31 and the other bail support member 32. In addition, when both support arms and both bail support members are referred to, the support arms and the bail support members are referred to as dual support arms 31 and 31 and dual bail support members 32 and 32.

The one support arm 31 extends forward from the cylindrical portion of the rotor 3, and supports the one bail support member 32. In addition, similarly, the other support arm 31 also extends forward from the cylindrical portion of the rotor 3, and supports the other bail support member 32. The dual bail support members 32 and 32 are supported to be rotatable between a fishing line winding position and a fishing line release position with respect to the dual support arms 31 and 31. FIG. 1 illustrates a state where the dual bail support members 32 and 32 are at the fishing line winding position.

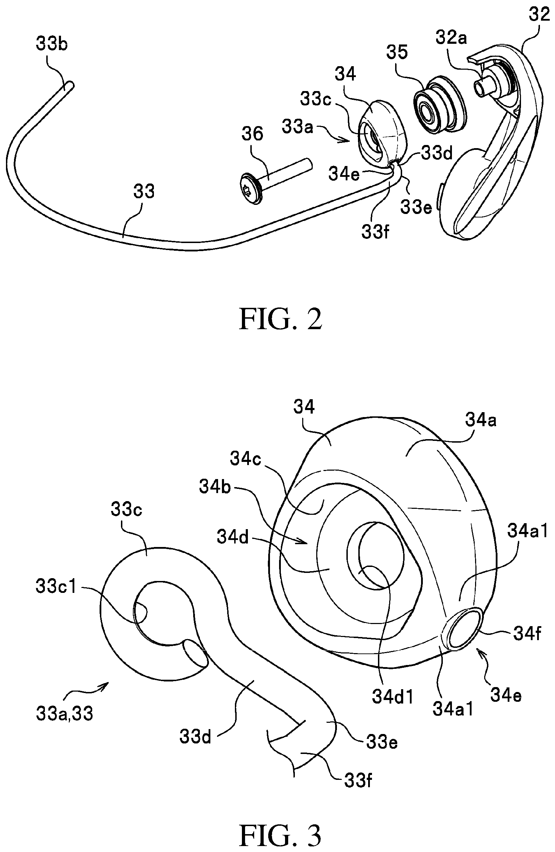

The dual bail support members 32 and 32 are members that support a bail 33 for picking up the fishing line. As illustrated in FIGS. 1 and 3, a line slider 34 that supports one end 33a of the bail 33 is attached to the one bail support member 32. In addition, a line roller 35 is rotatably supported between the one bail support member 32 and the line slider 34. The other bail support member 32 directly supports the other end 33b (refer to FIG. 2) of the bail 33.

As illustrated in FIG. 2, the bail 33 is a wire-shaped member that is curvedly formed in a substantially semi-circular shape. As illustrated in FIG. 3, the one end 33a of the bail 33 has a shape that is bent at substantially 90 degrees (substantially right angle) toward the line slider 34, and comprises an attachment portion 33c, a straight portion 33d, a bent portion 33e, and an extending portion 33f.

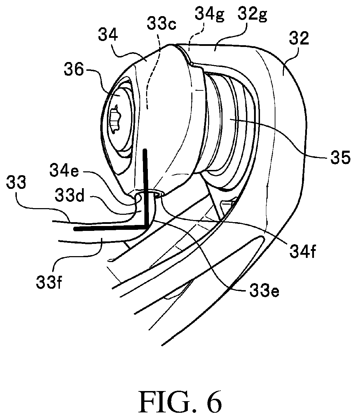

The attachment portion 33c is a portion attached to the line slider 34, and has a loop shape. An insertion hole 33c1 into which a fixing screw 36 (refer to FIG. 2) is inserted is formed on an inner side of the attachment portion 33c. As illustrated in FIGS. 2 and 6, the fixing screw 36 is a fixing member for attaching the line slider 34 to the one bail support member 32. As illustrated in FIG. 2, the fixing screw 36 is inserted from a line slider 34 side to which the one end 33a of the bail 33 is mounted, and is screwed to a cylindrical support shaft 32a of the one bail support member 32 in a state where the line roller 35 is disposed between the line slider 34 and the one bail support member 32. The line roller 35 is rotatably supported by the cylindrical support shaft 32a in a state where the fixing screw 36 is tightened. The fishing line picked up by the bail 33 is guided to the line roller 35 via the line slider 34. The shape of the attachment portion 33c is not limited to having a loop shape, and may be any shape such as a C shape or a curved shape as long as the attachment portion 33c is fixed by the fixing screw 36.

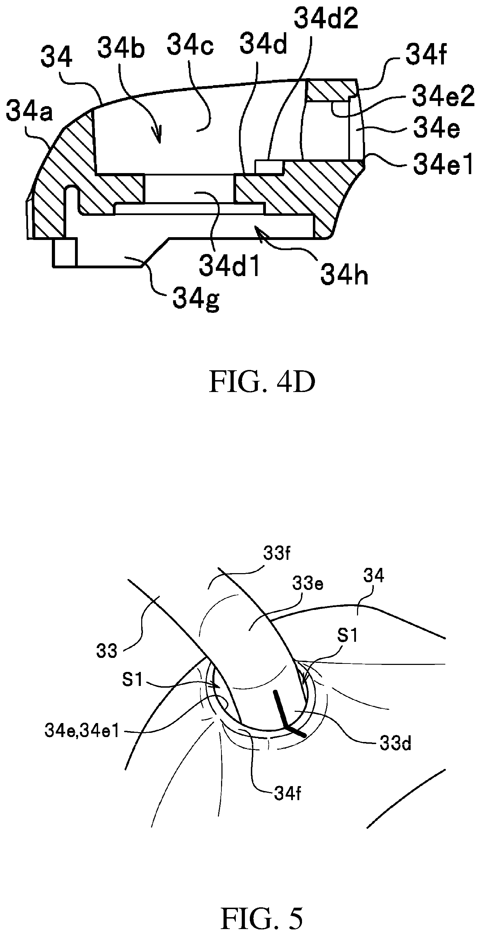

The straight portion 33d of the bail 33 is a straight portion that is formed to be continuous with the attachment portion 33c, and as illustrated in FIG. 2, is inserted into an insertion hole 34e of the line slider 34 which will be described later. As illustrated in FIG. 5, the straight portion 33d extends at substantially 90 degrees (substantially right angle) with respect to an opening edge portion 34f of the insertion hole 34e which will be described later in a state where the attachment portion 33c is attached to the line slider 34.

The bent portion 33e is a portion that is bent in an arc shape and that is formed to be continuous with the straight portion 33d, and as illustrated in FIGS. 2 and 3, is bent in a direction toward the other end 33b of the bail 33 at a bending angle of substantially 90 degrees (substantially right angle) with respect to the straight portion 33d. The extending portion 33f is a substantially straight portion that is formed to be continuous with the bent portion 33e. As illustrated in FIG. 6, the extending portion 33f is disposed in a substantially perpendicular positional relationship with the straight portion 33d.

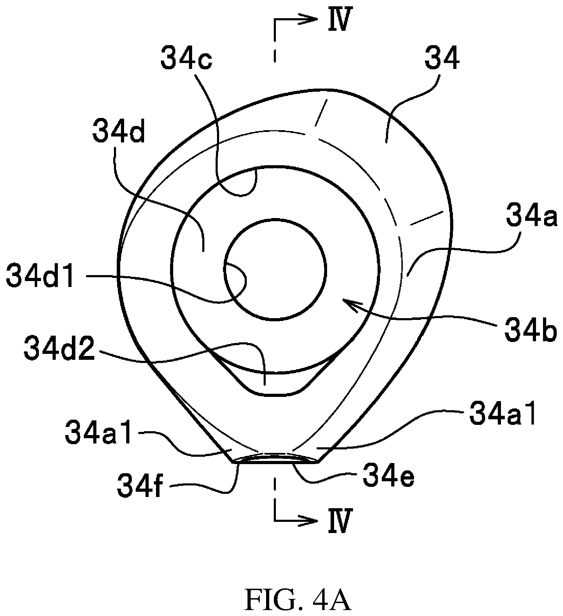

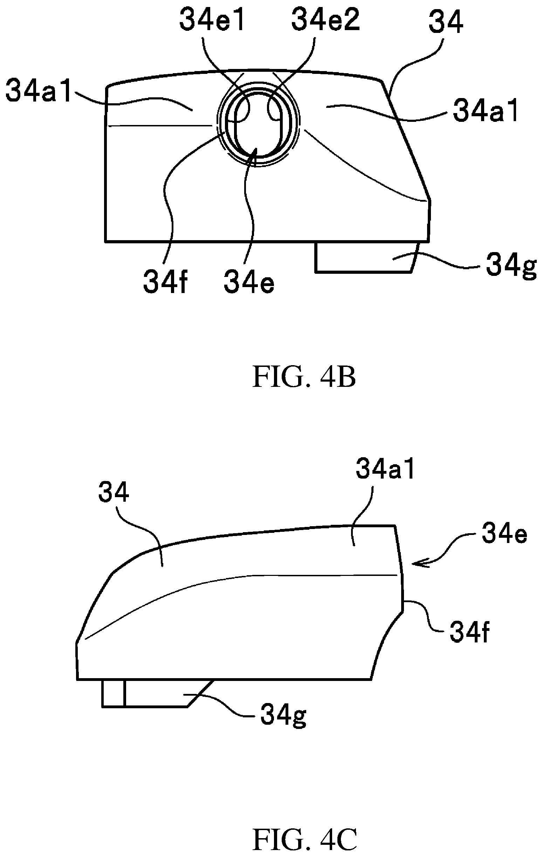

As illustrated in FIG. 4A, the line slider 34 has a substantially cam outer shape in a plan view. As illustrated in FIG. 2, the line slider 34 supports the one end 33a of the bail 33, and supports an end of the line roller 35. As illustrated in FIGS. 4A and 4D, the line slider 34 has a bottomed tubular shape comprising a peripheral wall portion 34a and a bottom portion 34d having a substantially circular shape in a plan view. As illustrated in FIG. 4A, a side surface (outer peripheral surface) of the peripheral wall portion 34a comprises inclined surfaces 34a1 and 34a1 that are tapered while being somewhat curved toward the front side. Furthermore, the insertion hole 34e into which the one end 33a of the bail 33 is inserted is formed at distal ends of the inclined surfaces 34a1 and 34a1 (refer to FIG. 4B). Details of the insertion hole 34e will be described later.

As illustrated in FIGS. 4A and 4D, an accommodation portion 34b surrounded by an inner surface 34c of the peripheral wall portion 34a and the bottom portion 34d is formed inside the peripheral wall portion 34a. The accommodation portion 34b functions as an accommodation recess that accommodates the attachment portion 33c of the bail 33 and a part of the head of the fixing screw 36 (refer to FIG. 6). A screw insertion hole 34d1 having a circular shape in a plan view is formed open at a central portion of the bottom portion 34d. The screw insertion hole 34d1 is formed to a size that allows the fixing screw 36 to be inserted therethrough. In addition, the bottom portion 34d is formed to be one step lower than a protruding portion 34d2 that is continuous with the insertion hole 34e.

As illustrated in FIG. 4B, the insertion hole 34e is formed at a central portion in a width direction in a front view. The insertion hole 34e has a substantially circular cross section. The insertion hole 34e is formed to be continuous with the inclined surfaces 34a1 and 34a1. A minimum inner diameter of an opening 34e1 of the insertion hole 34e is set to be larger than an outer diameter of the straight portion 33d (refer to FIG. 3) of the bail 33. Namely, in a state where the straight portion 33d of the bail 33 is inserted into the opening 34e1, as illustrated in FIG. 5, a gap S1 is formed between an inner edge of the opening 34e1 and an outer surface of the straight portion 33d. In other words, the insertion hole 34e has an inner diameter (minimum inner diameter) larger than the outer diameter of the straight portion 33d of the bail 33. The size of the gap S1 is set to such a size that the straight portion 33d of the bail 33 and the insertion hole 34e do not come into contact with each other when the bail 33 is rotated between a fishing line winding position and a fishing line release position. The minimum inner diameter of a part of the opening 34e1 may be set to such a size that the straight portion 33d (refer to FIG. 3) can be inserted thereinto, thereby forming the gap S1 between an inner surface of the other portion of the opening 34e1 and the outer surface of the straight portion 33d of the bail 33.

The opening edge portion 34f of the insertion hole 34e comprises a surface substantially orthogonal to an axis of the insertion hole 34e (axis of the straight portion 33d of the bail 33). In the present embodiment, substantially the entirety of the opening edge portion 34f is formed as a flat surface. The surface substantially orthogonal to the axis of the insertion hole 34e may be gently curved. In addition, the opening edge portion 34f is illustrated to be continuous over the entirety of a periphery of the insertion hole 34e, but is not limited thereto, and may be provided at a part of the periphery of the insertion hole 34e.

As illustrated in FIG. 4B, an inner surface 34e2 having a cross-sectional shape smaller than the cross-sectional shape of the opening 34e1 is formed on a back side of the opening 34e1 of the insertion hole 34e. The cross-sectional shape of the inner surface 34e2 is a substantially oval shape (oblong hole shape) in a front view. The size of a lateral width of the inner surface 34e2 is set to be equal to the size of the outer diameter of the straight portion 33d (refer to FIG. 3) of the bail 33. In addition, the size of a longitudinal width of the inner surface 34e2 is set to be larger than the size of the outer diameter of the straight portion 33d (refer to FIG. 3) of the bail 33. In addition, curved surfaces on the upper side and the lower side of the inner surface 34e2 have an arc shape corresponding to the arc shape of the outer surface of the straight portion 33d (refer to FIG. 3) of the bail 33. Accordingly, the straight portion 33d of the bail 33 is disposed to have a gap portion between the straight portion 33d and at least one of the curved surfaces on the upper side and the lower side of the inner surface 34e2. The gap portion functions as a relief portion for securing the degree of freedom of movement of the one end 33a when the one end 33a of the bail 33 is assembled to the line slider 34. In addition, after assembly, the gap portion functions as a space for avoiding contact with the inner surface 34e2 due to vibration or the like of the bail 33.

As illustrated in FIG. 4D, a recess 34h that accommodates an end of the line roller 35 (refer to FIG. 2) is formed on a lower surface of the line slider 34. In addition, a protruding wall 34g protruding opposite to the accommodation portion 34b is formed on a peripheral wall surrounding the recess 34h. As illustrated in FIG. 6, the protruding wall 34g functions as a receiving portion that receives a distal end of a fishing line guiding portion 32g provided in the one bail support member 32.

Next, a procedure for attaching the one end 33a of the bail 33 to the line slider 34 will be described. First, the other end 33b of the bail 33 is inserted into the accommodation portion 34b of the line slider 34, and the other end 33b is inserted into the insertion hole 34e from an accommodation portion 34b side. Then, the bail 33 is sequentially passed through the insertion hole 34e, and finally the one end 33a of the bail 33 is passed through the insertion hole 34e.

At this time, the size of the longitudinal width of the inner surface 34e2 of the insertion hole 34e is set to be larger than the size of the outer diameter of the straight portion 33d of the bail 33, and the minimum inner diameter of the opening 34e1 of the insertion hole 34e is larger than the outer diameter of the straight portion 33d of the bail 33. Accordingly, the degree of freedom of movement of the one end 33a of the bail 33 in the hole when passing through the insertion hole 34e is increased, so that the bent portion 33e of the bail 33 can also be smoothly passed therethrough.

Thereafter, as illustrated in FIG. 2, the line roller 35 is disposed between the line slider 34 and the one bail support member 32, and the fixing screw 36 is passed through the attachment portion 33c of the bail 33 and the line slider 34 from the line slider 34 side, and is screwed and tightened to the cylindrical support shaft 32a of the one bail support member 32 by which the line roller 35 is supported. Accordingly, the one end 33a of the bail 33, the line slider 34, and the line roller 35 can be collectively attached to the one bail support member 32.

When the attachment portion 33c of the bail 33 has a substantially C shape, a substantially curved shape, or the like, an end of the attachment portion 33c may be directly inserted and attached to the insertion hole 34e from the front side of the line slider 34.

According to the fishing spinning reel R1 of the present embodiment described above, since the one end 33a of the bail 33 can be attached to the line slider 34 by tightening the fixing screw 36, the bail 33 is easily attached. In addition, since the bail 33 is easily attached, and welding, fusion welding, caulking, bonding, or the like is not required when the one end 33a of the bail 33 is fixed, assembly can be realized at low cost.

In addition, since the fixing screw 36 is screwed from the line slider 34 side when the one end 33a of the bail 33 is fixed, it is not necessary to provide a screw hole on an outer surface side of the one bail support member 32. Accordingly, in the event of line entanglement of the fishing line, even when the fishing line moves on the outer surface side of the one bail support member 32, damage to the fishing line due to contact with the screw hole does not occur.

In addition, it is possible to insert the fixing screw 36 through an opening of the accommodation portion 34b while accommodating the attachment portion 33c in the accommodation portion 34b of the line slider 34. Therefore, the attachment portion 33c of the bail 33 is suitably accommodated and the one end 33a of the bail 33 is easily fixed. In addition, since at least a part of the head of the fixing screw 36 can be accommodated in the accommodation portion 34b, the fishing line is also less likely to become entangled with the head of the fixing screw 36 on the line slider 34 side.

In addition, since the gap S1 is formed between the straight portion 33d of the bail 33 and the insertion hole 34e, when the bail 33 is rotated between the fishing line winding position and the fishing line release position, contact between the straight portion 33d of the bail 33 and the insertion hole 34e due to vibration or the like can be suitably prevented. Therefore, deformation or damage due to contact between the straight portion 33d of the bail 33 and the insertion hole 34e can be prevented beforehand. This contributes to preventing damage to the fishing line. In addition, since the inner diameter of the insertion hole 34e is larger than the outer diameter of the straight portion 33d of the bail 33, the degree of freedom of the one end 33a of the bail 33 when being inserted into the insertion hole 34e is increased, so that assemblability can be improved.

In addition, when the line slider 34 is fixed to the one bail support member 32 by the fixing screw 36, the one end 33a of the bail 33 can be fixed together, so that assemblability is excellent.

The embodiment of the present invention has been described above; however, the present invention is not limited to the example described in the embodiment. For example, in the embodiment, the insertion hole 34e having a substantially circular cross section has been described; however, the present invention is not limited thereto, and various shapes such as a substantially oval cross section can be adopted.

In addition, the line slider 34 having a substantially cam outer shape in a plan view has been described; however, the present invention is not limited thereto, and various shapes can be adopted as long as the insertion hole 34e is formed on the side surface.

In addition, the entirety of the opening edge portion 34f of the insertion hole 34e is a surface substantially orthogonal to the axis of the insertion hole; however, the present invention is not limited thereto, and the opening edge portion 34f may be provided at a portion with which the fishing line has a possibility of coming into contact when the fishing line picked up by the bail 33 is guided to the line slider 34 along the bail 33.

In addition, the fixing screw 36 is used as a member that fixes the line slider 34 to the bail support member 32, but is not limited thereto, and a configuration in which fixing is performed by a pin member fixed by press-fitting, bonding, or the like may be adopted.

### Reference Signs List

- 1: Reel body
- 2: Handle
- 3: Rotor
- 4: Spool
- 31: Support arm
- 32: Bail support member
- 33: Bail
- 33a: One end
- 33c: Attachment portion
- 34: Line slider
- 34b: Accommodation portion
- 34e: Insertion hole
- 34f: Opening edge portion
- 35: Line roller
- 36: Fixing screw
- R1: Fishing spinning reel

## Claims

1. A fishing spinning reel (R1) comprising: a rotor (3) rotated by a winding operation of a handle (2); a bail support member (32) attached to a support arm (31) of the rotor (3), and supporting a bail (33); a line roller (35) supported by the bail support member (32), and guiding a fishing line to a spool (4) around which the fishing line is wound and held; and a line slider (34) supporting one end (33a) of the bail (33), and guiding the fishing line picked up by the bail (33) to the line roller (35),
wherein the one end (33a) of the bail (33) is attached to the line slider (34) by a fixing screw (36) and that the fishing spinning reel (R1) further comprises:
an attachment portion (33c) provided at the one end (33a) of the bail (33) and disposed in the line slider (34),
said fishing spinning reel being **characterized in that** the attachment portion (33c) is fixed to the line slider (34) by tightening the fixing screw (36) from a line slider (34) side.

2. The fishing spinning reel (R1) according to claim 1, further comprising:
an accommodation portion (34b) having a bottomed tubular shape, provided in the line slider (34), and accommodating the attachment portion (33c),
wherein the fixing screw (36) is inserted into the line slider (34) through an opening of the accommodation portion (34b).

3. The fishing spinning reel (R1) according to claim 1, wherein an insertion hole (34e) into which the one end (33a) of the bail (33) is inserted is formed on a side surface of the line slider (34), and
the insertion hole (34e) has an inner diameter larger than an outer diameter of the one end (33a) of the bail (33).

## Patentansprüche

1. Eine Angelrolle (R1), umfassend: einen Rotor (3), der durch Drehen einer Kurbel (2) gedreht wird; einen Bügelhalter (32), der an einem Stützarm (31) des Rotors (3) befestigt ist und einen Bügel (33) trägt; eine Schnurrolle (35), die vom Bügelhalter (32) getragen wird und eine Angelschnur zu einer Spule (4) führt, um die die Angelschnur gewickelt und gehalten wird; und einen Schnurschieber (34), der ein Ende (33a) des Bügels (33) trägt und die vom Bügel (33) aufgenommene Angelschnur zur Schnurrolle (35) führt,
wobei das eine Ende (33a) des Bügels (33) mittels einer Befestigungsschraube (36) am Schnurschieber (34) befestigt ist und die Angelrolle (R1) ferner Folgendes umfasst:
ein Befestigungsteil (33c), das an dem einen Ende (33a) des Bügels (33) vorgesehen und im Schnurschieber (34) angeordnet ist,
wobei die genannte Angelrolle **dadurch gekennzeichnet ist, dass** das Befestigungsteil (33c) mit dem Schnurschieber (34) durch Anziehen der Befestigungsschraube (36) von der Seite des Schnurschiebers (34) aus befestigt wird.

2. Die Angelrolle (R1) nach Anspruch 1, ferner umfassend:
ein Aufnahmeteil (34b) mit einer mit einem Boden versehenen rohrförmigen Gestalt, das im Schnurschieber (34) vorgesehen ist und das Befestigungsteil (33c) aufnimmt,
wobei die Befestigungsschraube (36) durch eine Öffnung des Aufnahmeteils (34b) in den Schnurschieber (34) eingeführt wird.

3. Die Angelrolle (R1) nach Anspruch 1, wobei auf einer Seitenfläche des Schnurschiebers (34) ein Einführloch (34e) ausgebildet ist, in das das eine Ende (33a) des Bügels (33) eingeführt wird, und
das Einführloch (34e) einen Innendurchmesser hat, der größer ist als der Außendurchmesser des einen Endes (33a) des Bügels (33).

## Revendications

1. Moulinet de pêche (R1) comprenant : un rotor (3) mis en rotation par une opération d'enroulement à l'aide d'une manivelle (2) ; un support d'anse (32) fixé à un bras de support (31) du rotor (3) et supportant une anse (33) ; un galet de ligne (35) supporté par le support d'anse (32) et guidant une ligne de pêche vers une bobine (4) autour de laquelle le fil de pêche est enroulé et maintenu ; et un coulisseau de ligne (34) supportant une certaine extrémité (33a) de l'anse (33) et guidant le fil de pêche récupéré par l'anse (33) vers le galet de fil (35).
dans lequel la certaine extrémité (33a) de l'anse (33) est fixée au coulisseau de ligne (34) par une vis de fixation (36) et le moulinet de pêche (R1) comprend en outre :
une partie de fixation (33c) prévue à la certaine extrémité (33a) de l'anse (33) et disposée dans le coulisseau de ligne (34),
ledit moulinet de pêche àétant **caractérisé en ce que** la partie de fixation (33c) est fixée au coulisseau de ligne (34) en serrant la vis de fixation (36) à partir d'un côté du coulisseau de ligne (34).

2. Moulinet de pêche (R1) selon la revendication 1, comprenant en outre :
une partie d'accueil (34b) présentant une forme tubulaire à fond, prévue dans le coulisseau de ligne (34), et accueillant la partie de fixation (33c),
dans lequel la vis de fixation (36) est insérée dans le coulisseau de ligne (34) à travers une ouverture de la partie d'accueil (34b).

3. Moulinet de pêche (R1) selon la revendication 1, dans lequel un trou d'insertion (34e) dans lequel est insérée la certaine extrémité (33a) de l'anse (33) est formé sur une surface latérale du coulisseau de ligne (34), et
le trou d'insertion (34e) présente un diamètre intérieur plus grand qu'un diamètre extérieur de la certaine extrémité (33a) de l'anse (33).
